# EUROPÄISCHE PATENTSCHRIFT

(11) **EP 1 232 936 B1**
(45) Veröffentlichungstag und Bekanntmachung des Hinweises auf die Patenterteilung: **12.03.2008**
(21) Anmeldenummer: 02000940.3
(22) Anmeldetag: 16.01.2002
(51) Int. Cl.: B62D 65/00, B62D 25/06

(54) **Verbindungsstruktur einer Kraftfahrzeugkarosserie**
A connecting structure for a motor vehicle body
Une structure de connexion de carrosserie de véhicule automobile

(30) Priorität: 20.02.2001 DE 10107968
(43) Veröffentlichungstag der Anmeldung: 21.08.2002
(73) Patentinhaber: Volkswagen Aktiengesellschaft, 38436 Wolfsburg (DE)
(72) Erfinder: Hermann, Jochen, 38104 Braunschweig (DE); Reinelt, Holger, 31241 Ilsede (DE)

(56) Entgegenhaltungen:
- EP-A- 1 043 215
- EP-A- 1 108 640
- DE-A- 10 026 089
- DE-A- 19 523 005
- DE-A- 19 857 565
- US-A- 4 417 762

## Beschreibung

Die Erfindung betrifft eine Verbindungsstruktur einer Kraftfahrzeugkarosserie, bestehend aus einem Dachblech und einem mit demselben fest verbundenen oberen Seitenteil, wobei die Verbindungsstruktur auf eine Dachrahmenstruktur aufgesetzt ist, sowie den weiteren Merkmalen des Oberbegriffs des Anspruchs 1 oder 2. Eine derartige Verbindungsstruktur ist zum Beispiel aus der EP 1 043 215 A2 bekannt.

Aus der Praxis ist es bekannt, ein Dachblech mit einem Seitenteil derart durch Punktschweißung von einander überlappenden Blechen zu verbinden, dass die Schweißverbindung in den Übergangsbereich vom Dach zum Seitenteil in Form einer Regenrinne gelegt ist.

Diese Regenrinne wird dann in der Regel durch eine Dachleiste abgedeckt oder es wird mit großem Aufwand die darin befindliche beschädigte Oberfläche zur Erzielung einer einwandfreien Oberflächenqualität nachbearbeitet.

Um diesen Aufwand zu vermeiden, wird mit der DE 195 23 005 A1 vorgeschlagen, die Schweißnaht in eine aus Seitenteil und Dachblech gebildete Kehle zu verlegen, wobei dieselbe durch eine von dem Dachblech abgestellte Seitenwange und durch einen an dem zugehörigen Seitenteil angeformten Flansch ausgebildet wird.

Da der vorgeschlagene Zusammenbau auf schrägen Flächen basiert, sind die zu verbindenden Einzelbauteile mit verhältnismäßig großen Toleranzen herzustellen. Der Aufwand zur Gewährleistung einer optimalen Maßgenauigkeit wird demgemäß als beträchtlich angesehen.

Hier setzt die nachfolgend beschriebene Erfindung an.

Aufgabe der vorliegenden Erfindung ist es, eine Verbindungsstruktur einer Kraftfahrzeugkarosserie, bestehend aus einem Dachblech und einem mit demselben fest verbundenen oberen Seitenteil, zu schaffen und derart zu verbessern, dass bei Einhaltung der geforderten Qualitätsansprüche schon die Einzelteile der Verbindungsstruktur mit geringsten Toleranzen hergestellt werden können, woraus im Ergebnis eine Verringerung des Aufwandes zur Gewährleistung einer optimalen Maßgenauigkeit der Verbindungsstruktur resultiert.

Erfindungsgemäß wird die Aufgabe durch eine Verbindungsstruktur mit den im Anspruch 1 oder den im Anspruch 2 genannten Merkmalen gelöst. Dadurch, dass das Dachblech zuzüglich zu dem nach unten weisenden Steg nachfolgend einen zur Fahrzeugmitte hin horizontal angeordneten Endflansch aufweist, wobei sich sowohl der abgewinkelte Endflansch als auch der Endflansch des Dachbleches auf dem annähernd horizontal ausgebildeten Bereich der Dachrahmenstruktur in ihrem Abwinklungsbereich abstützen, wobei der Endflansch auf dem Endflansch aufgesetzt ist, beziehungsweise dass das Dachblech zuzüglich zu dem nach unten weisenden Steg nachfolgend einen zur Fahrzeugmitte hin horizontal angeordneten Endflansch aufweist und das Dachblech zuzüglich zu dem nach unten weisenden Steg nachfolgend einen zur Fahrzeugmitte hin um einen Winkel "α" zwischen 90° und 100° zur Vertikalen geneigt angeordneten Endflansch aufweist und die abgewinkelte Seitenwange des oberen Seitenteils den Steg mit nachfolgend annähernd horizontal zur Fahrzeugmitte hin abgewinkelten Endflansch aufweist, der sich seinerseits auf einem annähernd horizontal ausgebildeten Bereich der Dachrahmenstruktur abstützt und mit dieser fest verbunden ist, ist vorteilhafte möglich, eine toleranzgenaue Montage beziehungsweise Verbindung von Dach- und Seitenteil zu gewährleisten.

Für eine hohe Maßgenauigkeit bei einfacher Herstellung und hoher Steifigkeit der Verbindungsstruktur ist es von Vorteil, wenn der, nach unten weisende Steg der Seitenwange des oberen Seitenteils gegenüber dem äußeren Abschnitt des Seitenteils um einen spitzen Winkel, also um einen Winkel von kleiner 90° nach unten abgewinkelt ist.

Aus den gleichen Gründen ist ebenfalls vorteilhaft, wenn der Endflansch der Seitenwange des oberen Seitenteils gegenüber dem Steg um einen Winkel zwischen 70 und 105°, vorzugsweise um zwischen 75 und 90° zur Fahrzeugmitte hin abgewinkelt ist.

In diesem Zusammenhang ist es ebenfalls von Vorteil, wenn der Steg des Dachbleches um einen Winkel zwischen 80 und 130°, vorzugsweise um zwischen 90 und 110° nach unten abgewinkelt ist.

Ferner wird als erfindungsgemäß angesehen, dass zwischen dem horizontal abgewinkelten Endflansch der Seitenwange und dem horizontal abgewinkelten Endflansch des Dachbleches gegebenenfalls eine oder mehrere Abstimmungsbänke einbringbar sind.

In einer weiteren Ausgestaltung der Erfindung kann der Endflansch der Seitenwange mit dem horizontal ausgebildeten Bereich der Dachrahmenstruktur verschweißt und/oder verklebt sein.

Ebenso kann der nach unten weisende Steg der Seitenwange mit dem nach unten weisenden Steg des Dachbleches verschweißt und/oder verklebt sein.

Aufgrund der Tatsache, dass sich erfindungsgemäß der nach unten weisenden Steg des Seitenteils mit nachfolgend horizontal zur Fahrzeugmitte hin abgewinkelten Endflansch auf einem ebenfalls horizontal ausgebildeten Bereich der Dachrahmenstruktur abstützt, kann das Seitenteil immer auf das durch das Dachblech (geringe Einzelteiltoleranz) vorgegebene Stichmaß eingestellt werden.

Gegebenenfalls während der Montage auftretende Höhenabweichungen können mit einfachen Mitteln in Form der vorgeschlagenen Abstimmungsbänke ausgeglichen werden.

Die Erfindung wird nachstehend anhand der in den Zeichnungen schematisch dargestellten Ausführungsbeispiele näher erläutert.

Es zeigen:
- Figur 1: den Querschnitt durch einen Dachseitenbereich einer Kraftfahrzeugkarosserie,
- Figur 2: den Querschnitt nach Fig. 1 zur Darstellung einer Ausführungsvariante der Erfindung.

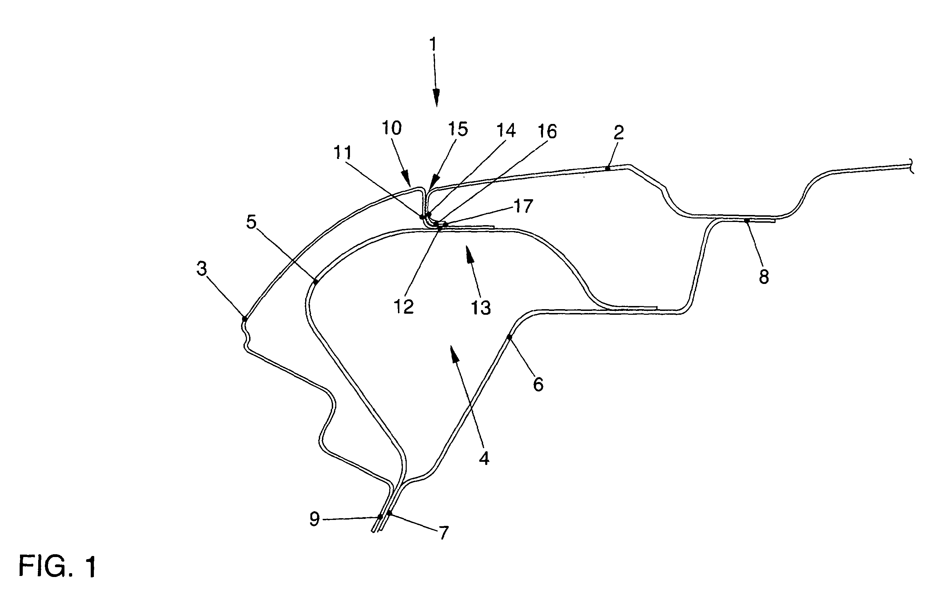

Wie aus der Fig. 1 ersichtlich, ist eine Verbindungsstruktur 1, bestehend aus einem Dachblech 2 und einem mit demselben fest verbundenen oberen Seitenteil 3, auf einer Dachrahmenstruktur 4 in Form eines Dachlängsträgers, der seinerseits aus einer oberen Dachrahmenverstärkung 5 und einem mit dieser fest verbundenen Dachrahmen 6 gebildet ist, aufgesetzt.

Die Dachrahmenstruktur 4 ist des Weiteren mit ihren Endflanschen 7 bzw. 8 zum einen mit einem Endflansch 9 des oberen Seitenteils 3 und zum anderen mit dem Dachblech 2 fest verbunden.

Die festen Verbindungen zwischen vorstehenden Karosseriebauteilen werden in der Regel durch Schweißen erzielt, jedoch sind auch Klebeverbindungen oder eine Kombination aus beiden denkbar.

Das obere Seitenteil 3 weist dachseitig weiterhin eine z. B. spitzwinklig, also eine um einen Winkel von kleiner 90° abgewinkelte Seitenwange 10 in Form eines nach unten weisenden Steges 11 mit nachfolgend horizontal zur Fahrzeugmitte hin abgewinkelten Endflansch 12 auf, der sich seinerseits auf einem ebenfalls horizontal ausgebildeten Bereich 13 der Dachrahmenstruktur 4 abstützt.

Wie vorliegend wird als geeignete Abstützung die Dachrahmenverstärkung 5 genutzt. Es versteht sich jedoch für den Fachmann von selbst, dass die Erfindung nicht auf diese konkrete Ausführungsform beschränkt ist, sondern jedwede andere geeignete horizontale Abstützung in Form eines beliebigen Innenbleches der Dachrahmenstruktur 4 mit erfaßt.

Das Dachblech 2 ist zum Seitenteil hin z. B. um einen Winkel von vorzugsweise 90 bis 110° nach unten abgewinkelt, wobei sowohl der nach unten weisende Steg 11 der Seitenwange 10 als auch der nach unten weisende Steg 14 des Dachbleches 2 in einem oberen Verbindungsbereich 15 fest verbunden sind.

Wie der Fig. 1 weiter entnehmbar ist, sind in diesem Ausführungsbeispiel die Stege 11 und 14 vertikal und parallel zueinander angeordnet und bieten sich demgemäß besonders für eine Klebeverbindung, gegebenenfalls eine vollflächige Verklebung der Berührungsflächen, an.

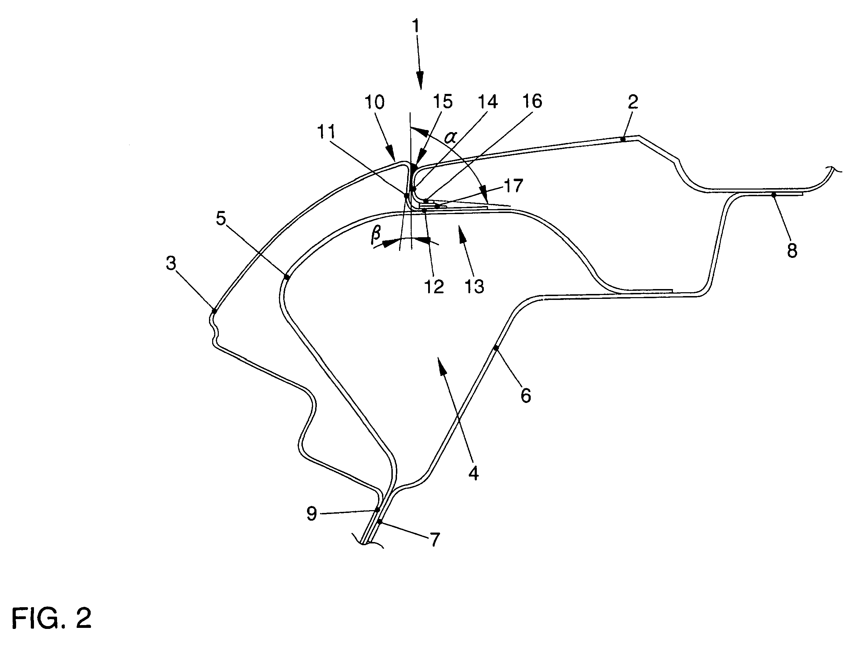

Nach der Erfindung sollen in dem Verbindungsbereich 15 eine Schweißverbindung oder eine Kombination aus Schweiß- und Klebeverbindung realisiert werden. Gem. Fig. 2 ist eine sogenannte Entgasungsschräge zwischen den Stegen 11 und 14 vorgesehen, die ihrerseits durch einen nach unten offenen Winkel "β" gekennzeichnet ist und gewährleistet, dass beispielsweise während der Durchführung einer Kehlnahtschweißung verdampfende Restbestände von Fett und/oder verdampfende Verzinkung aus dem Schmelzbad problemlos entweichen können.

Erfindungsgemäß wird der Winkel "β" derart eingestellt, dass der nach unten weisende Steg 11 der Seitenwange 10 und/oder der nach unten weisende Steg 14 des Dachbleches 2 in das von ihnen mitgebildete Profil hinein abgewinkelt sind.

Es wurde in umfangreichen Versuchen gefunden, dass der nach unten offenen Winkel "β" in Abhängigkeit von den zu erwartenden Verdampfungsmengen in einem Bereich zwischen 0° und 15° einzustellen ist.

Wie oben bereits dargetan, stützt sich der nach unten weisenden Steg 11 der Seitenwange 10 mit dem horizontal zur Fahrzeugmitte hin z. B. vorzugsweise um einen Winkel von 75 bis 90° abgewinkelten Endflansch 12 auf dem ebenfalls horizontal ausgebildeten Bereich 13 der Dachrahmenstruktur 4 ab und ist mit dieser durch Schweißung und/oder Klebung fest verbunden.

Für ein besseres Handling bezüglich der Erzielung einer qualitätsgerechten Schweiß- und/oder Klebverbindung zwischen den Stegen 11 und 14 kann es sich als vorteilhaft erweisen, wenn dem Dachblech 2 zuzüglich zu dem nach unten weisenden Steg 14 nachfolgend ein zur Fahrzeugmitte hin ebenfalls horizontal oder um einen Winkel "α" zwischen 90° und 100° zur Vertikalen geneigt angeordneter Endflansch 16 zugeordnet wird, der auf dem Endflansch 12 der Seitenwange 10 aufgesetzt ist.

Zudem können im Falle eines gegebenenfalls erforderlichen Ausrichtens des Dachbleches 2 zum oberen Seitenteil 3 zwischen den Endflanschen 12 und 16 bei Bedarf ein oder mehrere Abstimmungsbänke 17 eingebracht werden, die entweder dort verbleiben und festgelegt werden oder im Anschluß an die Erstellung der festen Verbindung zwischen dem oberen Seitenteil 3 und dem Dachblech 2 wieder zu entfernen sind.

## Patentansprüche

1. Verbindungsstruktur einer Kraftfahrzeugkarosserie, bestehend aus einem Dachblech (2) und einem mit demselben fest verbundenen oberen Seitenteil (3), wobei die Verbindungsstruktur auf eine Dachrahmenstruktur aufgesetzt ist, und wobei das obere Seitenteil (3) zum Dachblech (2) hin eine abgewinkelte Seitenwange (10) in Form eines nach unten weisenden Steges (11) aufweist, das Dachblech (2) zum Seitenteil (3) hin nach unten abgewinkelt ist und sowohl der nach unten weisende Steg (11) der Seitenwange (10) als auch der nach unten weisende Steg (14) des Dachbleches (2) zumindest in einem oberen Verbindungsbereich (15) fest miteinander verbunden sind, und die abgewinkelte Seitenwange (10) des oberen Seitenteils (3) den Steg (11) mit einem nachfolgend annähernd horizontal zur Fahrzeugmitte hin abgewinkeltem Endflansch (12) aufweist, der sich seinerseits auf einem annähernd horizontal ausgebildeten Bereich (13) der Dachrahmenstruktur (4) abstützt und mit dieser fest verbunden ist,
**dadurch gekennzeichnet, dass**
das Dachblech (2) zuzüglich zu dem nach unten weisenden Steg (14) nachfolgend einen zur Fahrzeugmitte hin horizontal angeordneten Endflansch (16) aufweist, wobei sich sowohl der abgewinkelte Endflansch (12) als auch der Endflansch (16) des Dachblechs (2) auf dem annähernd horizontal ausgebildeten Bereich (13) der Dachrahmenstruktur (4) in ihrem Abwinklungsbereich abstützen, wobei der Endflansch (16) auf dem Endflansch (12) aufgesetzt ist.

2. Verbindungsstruktur einer Kraftfahrzeugkarosserie, bestehend aus einem Dachblech (2) und einem mit demselben fest verbundenen oberen Seitenteil (3), wobei die Verbindungsstruktur auf eine Dachrahmenstruktur aufgesetzt ist, und wobei das obere Seitenteil (3) zum Dachblech (2) hin eine abgewinkelte Seitenwange (10) in Form eines nach unten weisenden Steges (11) aufweist, das Dachblech (2) zum Seitenteil (3) hin nach unten abgewinkelt ist und sowohl der nach unten weisende Steg (11) der Seitenwange (10) als auch der nach unten weisende Steg (14) des Dachbleches (2) zumindest in einem oberen Verbindungsbereich (15) fest miteinander verbunden sind, und die abgewinkelte Seitenwange (10) des oberen Seitenteils (3) den Steg (11) mit einem nachfolgend annähernd horizontal zur Fahrzeugmitte hin abgewinkeltem Endflansch (12) aufweist, der sich seinerseits auf einem annähernd horizontal ausgebildeten Bereich (13) der Dachrahmenstruktur (4) abstützt und mit dieser fest verbunden ist,
**dadurch gekennzeichnet, dass**
das Dachblech (2) zuzüglich zu dem nach unten weisenden Steg (14) nachfolgend einen zur Fahrzeugmitte hin um einen Winkel "α" zwischen 90° und 100° zur Vertikalen geneigt angeordneten Endflansch (16) aufweist.

3. Verbindungsstruktur nach einem der Ansprüche 1 und 2,
**dadurch gekennzeichnet, dass**
der Steg (11) der Seitenwange (10) des oberen Seitenteils (3) um einen Winkel von kleiner 90° abgewinkelt ist.

4. Verbindungsstruktur nach einem der Ansprüche 1 bis 3,
**dadurch gekennzeichnet, dass**
der Endflansch (12) der Seitenwange (10) des oberen Seitenteils (3) gegenüber dem Steg (11) um einen Winkel zwischen 75 und 105°, vorzugsweise um zwischen 80 und 90° abgewinkelt ist.

5. Verbindungsstruktur nach einem der Ansprüche 1 bis 4,
**dadurch gekennzeichnet, dass**
der Steg (14) des Dachbleches (2) um einen Winkel zwischen 80 und 130°, vorzugsweise um zwischen 90 und 110° abgewinkelt ist.

6. Verbindungsstruktur nach einem der Ansprüche 1 bis 5,
**dadurch gekennzeichnet, dass**
zwischen dem horizontal abgewinkelten Endflansch (12) der Seitenwange (10) und dem horizontal abgewinkelten Endflansch (16) des Dachbleches (2) gegebenenfalls eine oder mehrere Abstimmungsbänke (17) einbringbar sind.

7. Verbindungsstruktur nach einem der Ansprüche 1 bis 6,
**dadurch gekennzeichnet, dass**
der Endflansch (9) der Seitenwange (10) mit dem horizontal ausgebildeten Bereich (13) der Dachrahmenstruktur (4) verschweißt und/oder verklebt ist.

8. Verbindungsstruktur nach einem der Ansprüche 1 bis 7,
**dadurch gekennzeichnet, dass**
der nach unten weisende Steg (11) der Seitenwange (10) mit dem nach unten weisenden Steg (14) des Dachbleches (2) verschweißt und/oder verklebt ist.

9. Verbindungsstruktur nach einem der Ansprüche 1 bis 8,
**dadurch gekennzeichnet, dass**
der nach unten weisende Steg (11) der Seitenwange (10) und/oder der nach unten weisende Steg (14) des Dachbleches (2) zur Durchführung einer Schweißverbindung derart in das von ihnen jeweils mitgebildete Profil hinein abgewinkelt sind, dass zwischen denselben ein nach unten offener spitzer Winkel "β" zur Ausbildung einer Entgasungsschräge realisiert ist.

10. Verbindungsstruktur nach Anspruch 9,
**dadurch gekennzeichnet, dass**
der Winkel "β" zwischen 0° und 15° einzustellen ist.

## Claims

1. Connecting structure for a motor vehicle body, comprising a roof panel (2) and an upper side part (3) connected fixedly to the same, wherein the connecting structure is placed onto a roof frame structure, and wherein the upper side part (3) has, towards the roof panel (2), an angled side cheek (10) in the form of a downwardly pointing web (11), the roof panel (2) is angled downwards towards the side part (3) and both the downwardly pointing web (11) of the side cheek (10) and the downwardly pointing web (14) of the roof panel (2) are connected fixedly to each other at least in an upper connecting region (15), and the angled side cheek (10) of the upper side part (3) has the web (11) with an end flange (12) which is subsequently angled approximately horizontally toward the vehicle centre and, for its part, is supported on an approximately horizontally designed region (13) of the roof frame structure (4) and is connected fixedly to the latter, **characterized in that** the roof panel (2) has, following the downwardly pointing web (14), an end flange (16) which is arranged horizontally towards the vehicle centre, with both the angled end flange (12) and the end flange (16) of the roof panel (2) being supported in their angled region on the approximately horizontally designed region (13) of the roof frame structure (4), and with the end flange (16) being placed onto the end flange (12).

2. Connecting structure for a motor vehicle body, comprising a roof panel (2) and an upper side part (3) connected fixedly to the same, wherein the connecting structure is placed onto a roof frame structure, and wherein the upper side part (3) has, towards the roof panel (2), an angled side cheek (10) in the form of a downwardly pointing web (11), the roof panel (2) is angled downwards towards the side part (3) and both the downwardly pointing web (11) of the side cheek (10) and the downwardly pointing web (14) of the roof panel (2) are connected fixedly to each other at least in an upper connecting region (15), and the angled side cheek (10) of the upper side part (3) has the web (11) with an end flange (12) which is subsequently angled approximately horizontally toward the vehicle centre and, for its part, is supported on an approximately horizontally designed region (13) of the roof frame structure (4) and is connected fixedly to the latter, **characterized in that** the roof panel (2) has, following the downwardly pointing web (14), an end flange (16) which is arranged inclined by an angle "α" of between 90° and 100° with respect to the vertical towards the vehicle centre.

3. Connecting structure according to either of Claims 1 and 2, **characterized in that** the web (11) of the side cheek (10) of the upper side part (3) is angled by an angle of less than 90°.

4. Connecting structure according to one of Claims 1 to 3, **characterized in that** the end flange (12) of the side cheek (10) of the upper side part (3) is angled in relation to the web (11) by an angle of between 75° and 105°, preferably of between 80° and 90°.

5. Connecting structure according to one of Claims 1 to 4, **characterized in that** the web (14) of the roof panel (2) is angled by an angle of between 80° and 130°, preferably of between 90° and 110°.

6. Connecting structure according to one of Claims 1 to 5, **characterized in that** one or more coordinating banks (17) can optionally be inserted between the horizontally angled end flange (12) of the side cheek (10) and the horizontally angled end flange (16) of the roof panel (2).

7. Connecting structure according to one of Claims 1 to 6, **characterized in that** the end flange (9) of the side cheek (10) is welded and/or adhesively bonded to the horizontally designed region (13) of the roof frame structure (4).

8. Connecting structure according to one of Claims 1 to 7, **characterized in that** the downwardly pointing web (11) of the side cheek (10) is welded and/or adhesively bonded to the downwardly pointing web (14) of the roof panel (2).

9. Connecting structure according to one of Claims 1 to 8, **characterized in that**, in order to carry out a welding connection, the downwardly pointing web (11) of the side cheek (10) and/or the downwardly pointing web (14) of the roof panel (2) are angled into the profile formed in each case by them in such a manner that a downwardly open acute angle "β" is realized between them in order to form a degassing slope.

10. Connecting structure according to Claim 9, **characterized in that** the angle "β" is to be set between 0° and 15°.

## Revendications

1. Structure de connexion pour une carrosserie de véhicule automobile, constituée d'une tôle de toit (2) et d'une partie latérale supérieure (3) connectée fixement à celle-ci, la structure de connexion étant placée sur une structure de cadre de toit et la partie latérale supérieure (3) présentant, vers la tôle de toit (2), une paroi latérale coudée (10) en forme de nervure (11) tournée vers le bas, la tôle de toit (2) étant coudée vers le bas en direction de la partie latérale (3) et la nervure (11) tournée vers le bas de la paroi latérale (10) ainsi que la nervure (14) tournée vers le bas de la tôle de toit (2) étant connectées fixement l'une à l'autre au moins dans une région de connexion supérieure (15), et la paroi latérale coudée (10) de la partie latérale supérieure (3) présentant la nervure (11) avec une bride d'extrémité (12) suivante, coudée approximativement horizontalement vers le centre du véhicule, laquelle s'appuie pour sa part sur une région (13) de la structure du cadre de toit (4) réalisée approximativement horizontalement et est connectée fixement à celle-ci,
**caractérisée en ce que**
la tôle de toit (2) présente, en plus de la nervure (14) tournée vers le bas, une bride d'extrémité suivante (16) disposée horizontalement vers le centre du véhicule, la bride d'extrémité coudée (12) ainsi que la bride d'extrémité (16) de la tôle de toit (2) s'appuyant toutes deux, dans leur région coudée, sur la région (13) de la structure de cadre de toit (4) réalisée approximativement horizontalement, la bride d'extrémité (16) étant placée sur la bride d'extrémité (12).

2. Structure de connexion pour une carrosserie de véhicule automobile, constituée d'une tôle de toit (2) et d'une partie latérale supérieure (3) connectée fixement à celle-ci, la structure de connexion étant placée sur une structure de cadre de toit et la partie latérale supérieure (3) présentant, vers la tôle de toit (2), une paroi latérale coudée (10) en forme d'une nervure (11) tournée vers le bas, la tôle de toit (2) étant coudée vers le bas en direction de la partie latérale (3) et la nervure (11) tournée vers le bas de la paroi latérale (10) ainsi que la nervure (14) tournée vers le bas de la tôle de toit (2) étant connectées fixement l'une à l'autre au moins dans une région de connexion supérieure (15), et la paroi latérale coudée (10) de la partie latérale supérieure (3) présentant la nervure (11) avec une bride d'extrémité (12) suivante, coudée approximativement horizontalement vers le centre du véhicule, laquelle s'appuie pour sa part sur une région (13) de la structure du cadre de toit (4) réalisée approximativement horizontalement et est connectée fixement à celle-ci,
**caractérisée en ce que**
la tôle de toit (2) présente, en plus de la nervure (14) tournée vers le bas, une bride d'extrémité suivante (16) disposée de manière inclinée vers le centre du véhicule d'un angle "α" compris entre 90° et 100° par rapport à la verticale.

3. Structure de connexion selon l'une quelconque des revendications 1 et 2,
**caractérisée en ce que**
la nervure (11) de la paroi latérale (10) de la partie latérale supérieure (3) est coudée suivant un angle inférieur à 90°.

4. Structure de connexion selon l'une quelconque des revendications 1 à 3,
**caractérisée en ce que**
la bride d'extrémité (12) de la paroi latérale (10) de la partie latérale supérieure (3) est coudée par rapport à la nervure (11) suivant un angle compris entre 75 et 105°, de préférence entre 80 et 90°.

5. Structure de connexion selon l'une quelconque des revendications 1 à 4,
**caractérisée en ce que**
la nervure (14) de la tôle de toit (2) est coudée suivant un angle compris entre 80 et 130°, de préférence entre 90 et 110°.

6. Structure de connexion selon l'une quelconque des revendications 1 à 5,
**caractérisée en ce que**
l'on peut introduire entre la bride d'extrémité (12) de la paroi latérale (10) coudée horizontalement et la bride d'extrémité (16) de la tôle de toit (2) coudée horizontalement, éventuellement un ou plusieurs bancs d'adaptation (17).

7. Structure de connexion selon l'une quelconque des revendications 1 à 6,
**caractérisée en ce que**
la bride d'extrémité (9) de la paroi latérale (10) est soudée et/ou collée à la région (13) de la structure de cadre de toit (4) réalisée horizontalement.

8. Structure de connexion selon l'une quelconque des revendications 1 à 7,
**caractérisée en ce que**
la nervure (11) de la paroi latérale (10) tournée vers le bas est soudée et/ou collée à la nervure (14) de la tôle de toit (2) tournée vers le bas.

9. Structure de connexion selon l'une quelconque des revendications 1 à 8,
**caractérisée en ce que**
la nervure (11) de la paroi latérale (10) tournée vers le bas et/ou la nervure (14) de la tôle de toit (2) tournée vers le bas sont coudées dans le profil qu'elles forment ensemble pour réaliser une connexion soudée, de telle sorte qu'entre elles soit formé un angle aigu ouvert vers le bas "β" pour réaliser un chanfrein de dégazage.

10. Structure de connexion selon la revendication 9,
**caractérisée en ce que**
l'angle "β" doit être ajusté entre 0° et 15°.
